# EUROPEAN PATENT SPECIFICATION

(11) **EP 2 781 113 B1**
(45) Date of publication and mention of the grant of the patent: **19.08.2015**
(21) Application number: 11797054.1
(22) Date of filing: 14.11.2011
(51) Int. Cl.: H04W 24/06, H04W 88/08

(54) **METHODS AND ARRANGEMENTS FOR DETERMINING AN INTEGRITY OF AN AIR INTERFACE**
VERFAHREN UND ANORDNUNGEN ZUR BESTIMMUNG DER INTEGRITÄT EINER LUFTSCHNITTSTELLE
PROCÉDÉS ET AGENCEMENTS POUR LA DÉTERMINATION DE L'INTÉGRITÉ D'UNE INTERFACE HERTZIENNE

(43) Date of publication of application: 24.09.2014
(73) Proprietor: Telefonaktiebolaget LM Ericsson (Publ), 164 83 Stockholm (SE)
(72) Inventor: SJÖLINDER, Sven, S-114 39 Stockholm (SE); OLSSON, Andreas, S-112 16 Stockholm (SE)
(74) Representative: Ericsson
(86) International application number: PCT/SE2011/051365
(87) International publication number: WO 2013/074003

(56) References cited:
- DE-A1-102005 041 453
- US-A1- 2006 059 243
- US-A1- 2010 214 935

## Description

### TECHNICAL FIELD

Embodiments herein relate to a base station and a method in a base station. In particular, embodiments herein relate to determining an integrity of an air interface.

### BACKGROUND

In a typical cellular network, also referred to as a wireless communication system, User Equipments (UEs), communicate via a Radio Access Network (RAN) to one or more core networks (CNs).

A user equipment is a mobile terminal by which a subscriber can access services offered by an operator's core network. The user equipments may be for example communication devices such as mobile telephones, cellular telephones, laptops or tablet computers, sometimes referred to as surf plates, with wireless capability. The user equipments may be portable, pocket-storable, hand-held, computer-comprised, or vehicle-mounted mobile devices, enabled to communicate voice and/or data, via the radio access network, with another entity, such as another mobile station or a server.

User equipments are enabled to communicate wirelessly in the cellular network. The communication may be performed e.g. between two user equipments, between a user equipment and a regular telephone and/or between the user equipment and a server via the radio access network and possibly one or more core networks, comprised within the cellular network.

The cellular network covers a geographical area which is divided into cell areas. Each cell area is served by a base station, e.g. a Radio Base Station (RBS), which sometimes may be referred to as e.g. "eNB", "eNodeB", "NodeB", or BTS (Base Transceiver Station), depending on the technology and terminology used. The base stations may be of different classes such as e.g. macro base station, home base station or pico base station, based on transmission power and thereby also on cell size.

A cell is a geographical area where radio coverage is provided by the base station at a base station site. One base station, situated on the base station site, may serve one or several cells. Further, each base station may support one or several communication technologies. The base stations communicate over the air interface operating on radio frequencies with the user equipments within range of the base stations.

In some radio access networks, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Spécial Mobile).

In 3rd Generation Partnership Project (3GPP) Long Term Evolution (LTE), base stations, which may be referred to as eNodeBs or eNBs, may be directly connected to one or more core networks.

UMTS is a third generation, 3G, mobile communication system, which evolved from the second generation, 2G, mobile communication system GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipments. The 3GPP has undertaken to evolve further the UTRAN and GSM based radio access network technologies.

In the context of this disclosure, a base station as described above will be referred to as a base station or a Radio Base Station (RBS). A user equipment as described above, will in this disclosure be referred to as a user equipment or a UE.

The expression DownLink (DL) will be used for the transmission path from the base station to the user equipment. The expression UpLink (UL) will be used for the transmission path in the opposite direction i.e. from the user equipment to the base station.

Cellular communication networks evolve towards higher data rates, together with improved capacity and coverage. In 3GPP, standardization body technologies like GSM, HSPA and LTE have been and are currently developed.

Some cellular networks are so called packet switched networks.

In packet switched networks data is transmitted from a source to an end-user user equipment in so called data packets, by sequences of data packets being transmitted with variable bit-rate over the packet switched cellular network. When traversing different network nodes such as for example routers, gateways and switches in the core network and the radio access network on the way from the source to the end-user, the data packets are buffered and queued, resulting in a variable integrity, such as for example a delay or a throughput, depending for example on a current traffic load in the packet switched network. An integrity such as a delay or a jitter may also be caused by a poor implementation in a network node that the data packets traverses.

The integrity in form of delay between an end-user user equipment and a server in Internet is an important property to get high throughput and to get good end-user performance for delay sensitive applications such as voice over Internet Protocol (IP). If the end-user user equipment is a mobile device, it may often be assumed that a long delay is caused in the radio part of the connection, i.e. between the user equipment and the base station in the RAN.

To measure delay in different parts of the packet switched network that the data packets traverses may be a method to evaluate how each part of the network fulfills end-users quality requirements.

For LTE RAN there are delay measurements which are defined for the purpose of determining an integrity in the form of a delay between the base station and the user equipment. These are however for the DL only, and they only include delays on Packet Data Convergence Protocol (PDCP), Radio Link Control (RLC) and Medium Access Control (MAC) layer not including processing in the IP and GPRS Tunneling Protocol User Plane (GTP-u) handling which is also needed to get a full picture of the delays introduced after a packet is received by the base station.

Also, from an implementation point of view, these DL delay measurements are implemented in a very time critical part of the software, since in LTE, transmissions of data packets from the user equipment are scheduled on a 1 ms time window basis.

Document US 2006/059243 teaches an arrangement where a service provider creates a test message - for example a ping command - which is sent via a Short Message Service Centre (SMS-C) and a Radio Access Network (RAN) to the Subscriber Identity Module (SIM) of a User Equipment (UE). If the SMS is successfully delivered, a response message is received by the service provider. Real messages can then be sent by the service provider to the UE. This document thus teaches to check the integrity of the link through various nodes in the network to the UE.

### SUMMARY

In view of the discussion above, it is an object for embodiments herein to provide an improved way of determining an integrity of an air interface between a base station and a user equipment.

According to a first aspect, the object is achieved by a method in a base station for determining an integrity of an air interface between the base station and a user equipment. The base station and the user equipment are comprised in a packet switched network. The base station configures an internet protocol host in the base station. The internet protocol host has a first internet protocol address. The first internet protocol address is in the same domain as a second internet protocol address. The second internet protocol address is an internet protocol address of the user equipment. The base station defines a data radio bearer between the base station and the user equipment. The data radio bearer is limited to the air interface between the base station and the user equipment. The base station sends a test data to the user equipment in the defined data radio bearer. The base station sends the test data on an internet protocol level from the first internet protocol address to the second internet protocol address. The base station receives a response associated with the test data from the user equipment. The base station determines an integrity of the air interface based on the response.

According to a second aspect, the object is achieved by a base station for determining an integrity of an air interface between the base station and a user equipment. The base station and the user equipment are comprised in a packet switched network. The base station comprises a configuring unit. The configuring unit is arranged to configure an internet protocol host in the base station. The internet protocol host has a first internet protocol address. The first internet protocol address is in the same domain as a second internet protocol address. The second internet protocol address is an internet protocol address of the user equipment. The base station further comprises a defining unit. The defining unit is configured to define a data radio bearer between the base station and the user equipment. The data radio bearer is limited to the air interface between the base station and the user equipment. The base station comprises a transmitter. The transmitter is configured to send a test data to the user equipment in the defined data radio bearer. The transmitter is further configured to send the test data is sent on an internet protocol level from the first internet protocol address to the second internet protocol address. The base station further comprises a receiver. The receiver is configures to receive a response associated with the test data from the user equipment. The base station further comprises a determining unit. The determining unit is configured to determine an integrity of the air interface based on the response.

Thanks to the base station defining of an IP host with an Internet Protocol (IP) address in the same domain as the IP address of the user equipment, the test data and the test data response are sent and received on an IP level by the base station. Since the defined data radio bearer is limited specifically to the air interface of interest, the test data and the response can be sent directly between the base station and the user equipment without having to pass other nodes in the packet switched network. Thanks to this, the determined integrity is an integrity at the IP level, which is specific to the air interface between the base station and the user equipment. This provides an improved way of determining an integrity, such as for example a delay, between the base station and the user equipment, which integrity may be used for optimization and performance overview.

### BRIEF DESCRIPTION OF THE DRAWINGS

- Figure 1: is a schematic block diagram illustrating an embodiment of a packet switched network.
- Figure 2: is a combined signalling scheme and flowchart illustrating embodiments in a packet switched network.
- Figure 3: is a schematic illustration of radio bearers in a packet switched network.
- Figure 4: is a combined signalling scheme and flowchart illustrating embodiments in a base station.
- Figure 5: is a combined signalling scheme and flowchart illustrating embodiments in a base station.
- Figure 6: is a flowchart illustrating embodiments of method in a base station.
- Figure 7: is a block diagram illustrating embodiments of a base station.

### DETAILED DESCRIPTION

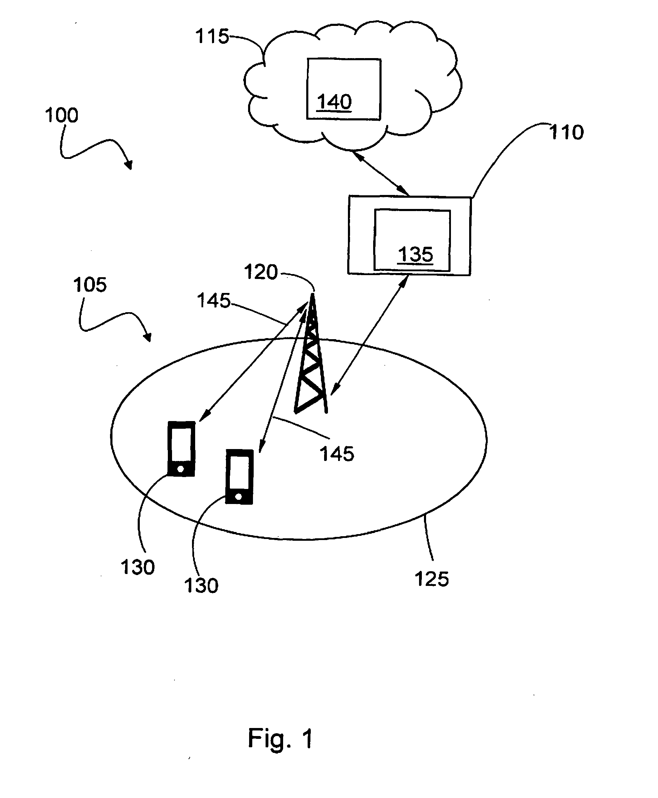

**Figure 1** schematically depicts **a packet switched network 100.** The packet switched network 100 may be an LTE cellular network or any other wireless network.

The packet switched network 100 comprises **a radio access network 105 and a core network 110.** The packet switched network 100 is connected to **Internet 115.** The radio access network 105 comprises **a base station 120.** The base station 120 is, in this example, an eNodeB. The base station 120 may in other embodiments be of another type, and may be referred to by different names, such as for example eNodeB, RBS, NodeB, BTS, micro, pico or HetNet stations depending on the technology and terminology used. The base stations may in some technologies be connected to not shown nodes such as for example a radio network controller or a base station controller.

The base station 120 serves **a cell 125.** By "serving a cell" is understood wirelessly transmitting downlink data and/or receiving uplink data via radio communication in the cell to a user equipment comprised therein.

The radio access network 105 further comprises **a user equipment 130.** The user equipment 130 is connected to the base station via an air interface 145. In the example in figure 1, two user equipments 130 are depicted.

The user equipment 130 may be for example a communication device such as a mobile telephone, a cellular telephone, a laptop, or a tablet computer, sometimes referred to as a surf plate, with wireless capability. The user equipment 130 may be a portable, pocket-storable, hand-held, computer-comprised, or vehicle-mounted mobile device, enabled to communicate voice and/or data with another entity, such as another mobile station or a server, via the packet switched network 100.

The core network 110 further comprises **a gateway 135.** The gateway 135 may be a Serving GateWay (SGW), or a node that handles differences between the radio access network 105 and Internet transmission properties and requirements.

The internet comprises **a peer entity 140** which may be a server providing a service to the user equipment 130. The peer entity may also be another not shown user equipment being a session partner, or requesting a service from the user equipment 130, i.e. in cases where the user equipment 130 acts as a server.

It is to be understood that figure 1 is merely a schematic illustration, and that the packet switched network 100 may in reality comprise several further base stations, user equipments and other network nodes which are not shown in the figure 1.

As part of the development towards embodiments herein, a problem will first be identified and discussed below, with reference to figure 1.

In a packet switched network such as the packet switched network 100, disclosed in figure 1, integrities vary at different places in the packet switched network. By integrity is here understood for example jitter, delay, throughput and other qualities related to the transferral of the packets in from a source to a destination in the packet switched network 100, for example from the internet 115 to the user equipment 130, or vice versa, in figure 1. Variations in the integrities may be due to many reasons, such as for example poor implementation in a specific network node, or a high traffic load etc. Some integrities, such as for example a delay, may occur at different places that the data packet traverses, for example in the core network 110, or in the radio access network 105, when the data packet is transferred from the internet 115 to the user equipment 130.

To determine how different parts of the packet switched network 100 fulfil end-users quality requirements, there is hence a need for determining an integrity which is specific for a part of the transferal of the data packet in the packet switched network 100.

As for delay, this integrity usually grows with load, and hence by determining a delay for specific parts of the packet switched network 100, it would be possible to determine where the packet switched network 100 a congestion is.

A ping is a general method to determine a delay, which will be described in more detail further down in this disclosure. A ping may not however be applied between to nodes that are in different Internet Protocol (IP) address domains, which is the case for the base station 120 and the user equipment 130.

This is because it is not allowed in internet protocol to send a message, i.e. a data packet, between two private IP address domains. The common setup of mobile systems is that at least the RAN nodes, such as the base station 120, but most often also the user equipments 130, have private IP adresses. In case both of them have, they are in different domains with no allowed connectivity on an IP level. Hence this makes it impossible to send a ping from the IP address of the base station to the IP address of the user equipment 130.

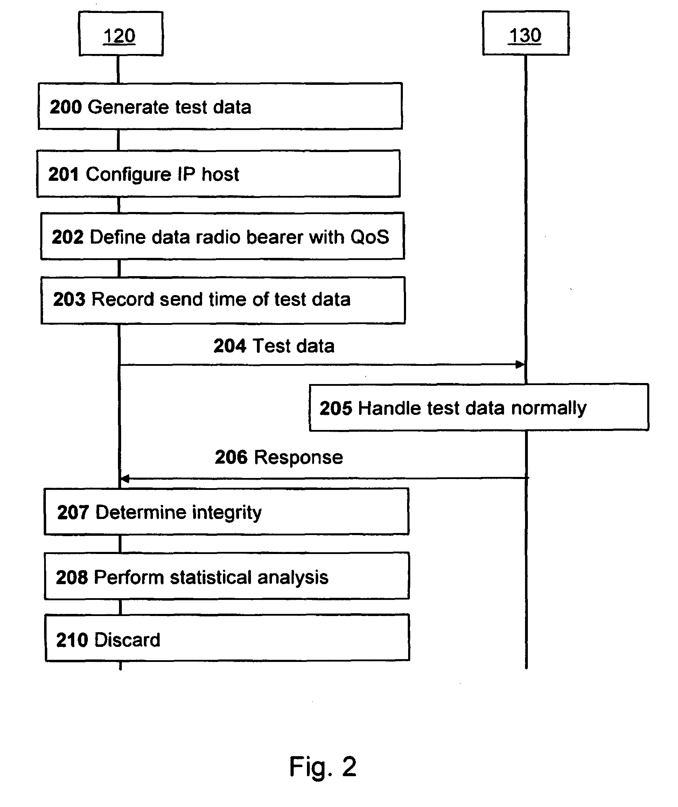

**Figure 2** is a combined signaling scheme and block diagram illustrating, in a general way, some embodiments herein for determining an integrity which is specific for the air interface 145 between the base station 120 and the user equipment 130.

**In action 200** the base station 120 generates a test data, the test data may be data intended to mimic a certain traffic flow. In this example the test data is an echo request in the form of a so called ping. Ping is named after the sound that sonar makes, since its methodology is similar to sonar's echo location.

Ping may be defined as an echo signal used to test the reachability of a host on an internet protocol network and to measure the round-trip time for messages sent from the originating host to a destination.

A ping may operate by sending Internet Control Message Protocol (ICMP) echo request packets to a destination host and waiting for an ICMP response. In the process it measures the time from transmission to reception, i.e. a round-trip time, and records any packet loss. The results of the test may be printed in form of a statistical summary of the response packets received, including the minimum, maximum, and the mean round-trip times, and sometimes the standard deviation of the mean.

Ping may be run using various options or command line switches, depending on the implementation, that enable special operational modes, such as to specify the packet size used as the probe, automatic repeated operation for sending a specified count of probes, time stamping options, or to perform a ping flood.

**In action 201,** the base station 120 configures an IP-host that has an IP address in the same domain as the user equipment 130. This is performed to enable connectivity between the base station 120 and the user equipment 130 on the IP level, to make it possible to send test data such as for example pings between the base station 120 and the user equipment 130.

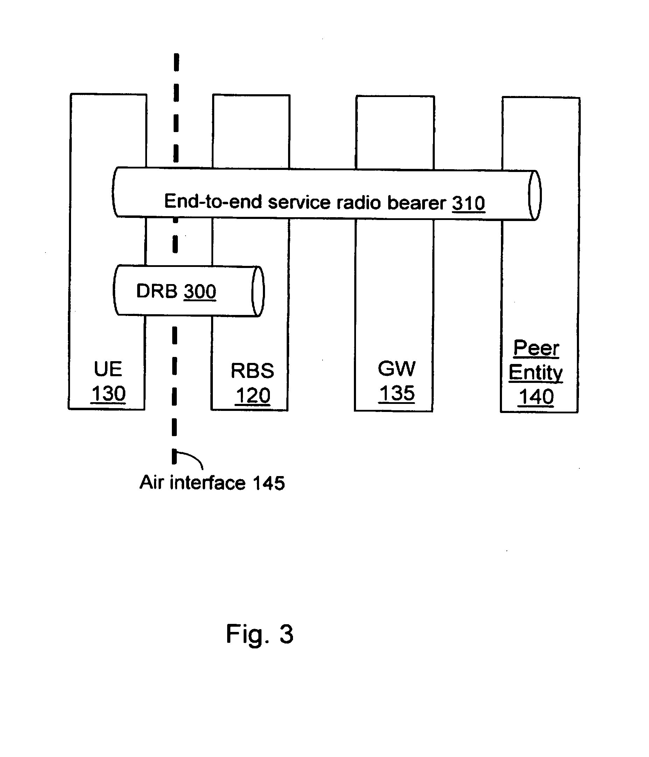

**In action 202,** the base station 120 defines a data radio bearer with a specific quality of service to use for transmission of the test data. The data radio bearer is limited to the air interface 145 between the base station 120 and the user equipment 130. This will be further illustrated in figure 3 below.

**In action** 203, the base station 120 records a send time of the test data, i.e. the ping in this example. The send time will later be used for determining a roundtrip time for the ping between the base station 120 and the user equipment 130.

**In action 204,** the base station 120 sends the test data using the in action 202 defined data radio bearer. Thanks to the IP-host configured in action 201, which has an IP address in the same domain as the IP address of the user equipment 130, the test data can be sent on an IP-level from the IP-host in the base station 120 to the user equipment 130.

**In action 205,** the user equipment 130 receives and handles the test data according to its normal procedures.

**In action 206,** the user equipment 130 returns a response to the test data, i.e. the ping, by returning the ping to the base station 120, using the same data radio bearer. The response is received in the base station 120.

**In action 207,** the base station 120 determines a delay based on the send time of the ping recorded in action 203, and the time the response, i.e. the returned ping from the user equipment 120 in this case, was received. Since the ping was sent and received in the in action 202 defined data radio bearer which is limited to the air interface 145, the determined delay is an integrity specific to the air interface 145.

**In action 208,** the base station 120 performs a statistical analysis based on the determined delay and other previously determined delays related to the same and/or other user equipments 130.

**In action 209,** the base station 120 discards the received ping to prevent it from being further transmitted to another radio network node, as would be the case with other uplink data from the user equipment 130.

Thanks to embodiments herein, a test data ping, which may, as previously mentioned, not normally be directly forwarded to the user equipment 130 from the base station 120 because they are in different IP-address domains, can now be sent and used for determining a delay specific to the air interface 145.

This is advantageous compared to transmitting the ping on an end-to-end service radio bearer between a source, such as the peer entity 140, and the user equipment 130.

Also, the ping may be used to determine the delay both in the UL and the DL. This requires functionality in the user equipment 130 to add time information when the packet is received and transmitted. Such information may be available and added.

**Figure 3** schematically illustrates different radio bearers which may be present in the packet switched network 100. For the sake of clarity, numerals from the figure 1 will also be referred to in the figure 3. Figure 3 illustrates **a data radio bearer (DRB) 300** as the in action 202 defined data radio bearer. The data radio bearer 300 is limited to the air interface 145 between the base station 120 and the user equipment 130. The figure 3 further illustrates **an end-to-end service radio bearer 310.** The end-to-end service radio bearer 310 is established between a host in the peer entity 140 such as the in figure 1 depicted peer entity 140, and the user equipment 130. Such end-to-to end service radio bearers have previously been used for pings, as previously mentioned. A delay which is determined using the end-to-end service bearer 310 is however not limited to the delay of the air interface between the base station 120 and the user equipment 130. Therefore, it is advantageous to use the data radio bearer 300 for the test data, e.g. ping, according to embodiments herein since this enables determination of an integrity, e.g. delay, which is specific to the air interface 145 between the base station 120 and the user equipment 130.

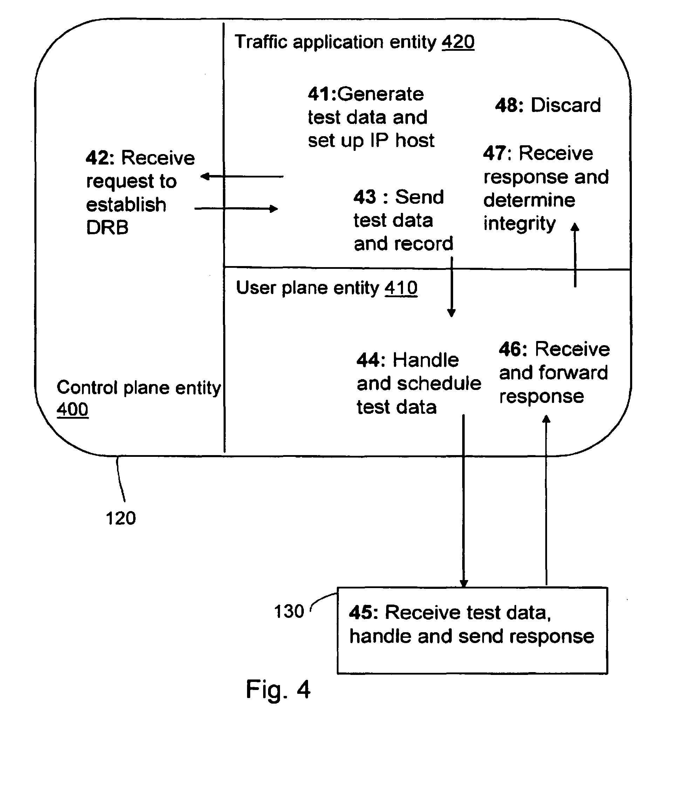

**Figure 4** schematically illustrates in a more detailed way, and by way of example only, how some embodiments herein may be implemented and carried out.

In this figure, the base station 120 is schematically illustrated as comprising a **control plane entity 400.** The control plane entity 400 may be referred to as L3, Control Plane, or Radio Access Control (RAC). The base station 120 illustrated in figure 4 further comprises **a user plane entity 410,** which may be referred to as Base Band (BB). **A traffic application entity 420** is also illustrated in the base station 120 in figure 4. The purpose of the figure 4 is to exemplify how these entities 400, 410 and 420 may interact when actions according to some embodiments herein are carried out.

For the sake of clarity, some numerals in figure 1 and 3 will also be referred to. The actions which are referred to in the figure 4 will be described in the following.

### Action 41

The traffic application entity 420 generates a test data, i.e. certain traffic flow, e.g. a ping. An IP-host with an IP-address in the same domain as the user equipment 130 is set up in the base station 120.

### Action 42

The traffic application entity 420 requests establishment of a new data radio bearer 300 with a specific Quality of Service (QoS) from the Control Plane entity 400. The request is received by the control plane entity 400, that decides if and when it is possible to set up a new data radio bearer. Note that it may in some embodiments be an MME which is not shown in the figure 1 that controls the establishment of data radio bearers and evolved radio bearers. In this example, the defined data radio bearer 300 to be used for the test data is hence a new data radio bearer.

### Action 43

The traffic application entity 420 sends one or more packet comprising the test data to the user plane entity 410 and records the time when the one or more test data packet is sent.

### Action 44

The user plane entity 410 handles the test data as any other data according to the QoS and schedules it for transmission to the user equipment 130 using the defined data radio bearer 300.

### Action 45

The user equipment 130 receives the test data and handles the test data as any other data, unaware of the fact that it is generated test data from the base station 120. The user equipment 130 then sends a response to the test data back to the base station 120 also on the established data radio bearer 300. In the case of the test data being a ping, it returns the ping as the response.

### Action 46

The response is received in the user plane entity 410, on the established data radio bearer 300. The user plane entity 410 forwards the response to the traffic application entity 420.

### Action 47

The traffic application entity 420 receives the response and determines an integrity based on it, if the test data was a ping, the integrity may be a delay. Statistics may be generated based on the determined integrity. Both standard ping, round trip time, or two way ping may be used if the user equipment 130 supports time stamping.

### Action 48

The traffic application entity 420 discards the response, to prevent it from being sent on the user plane path up to for example a serving gateway, such as the in figure 1 depicted serving gateway 135.

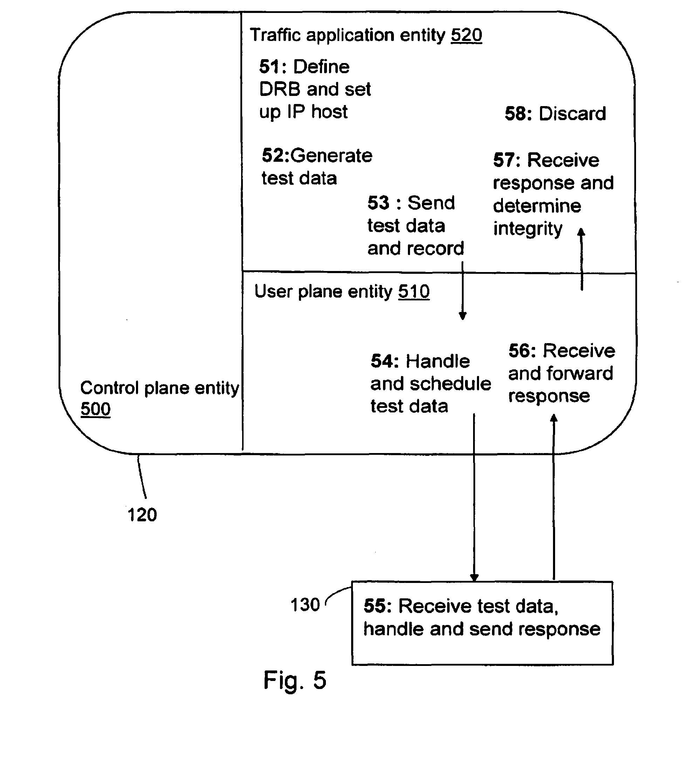

**Figure 5** schematically illustrates, also in a detailed way and by way of example, how some other embodiments herein may be implemented and carried out. In this figure, the base station 120 is schematically illustrated as comprising a **control plane entity 500.** The control plane entity 500 may be referred to as L3, Control Plane, or Radio Access Control (RAC). The base station 120 illustrated in figure 5 further comprises **a user plane entity 510,** which may be referred to as Base Band (BB), and **a traffic application entity 520.** As in figure 4, the purpose of the figure 5 is to exemplify how the entities may interact when actions according to some embodiments herein are carried out.

For the sake of clarity, some numerals in figure 1 and 3 will also be referred to. The actions which are referred to in the figure 5 will be described in the following.

### Action 51

In this example, the traffic application entity 520 has an in-activity control function, i.e. it may evaluate if an existing data radio bearer is used for traffic or not. It may hence decide if it wants to apply the test data on an existing data radio bearer or not, depending on for example if the data radio bearer in question is active or not. Depending on the determining to be made, an active or not active data radio bearer may be defined as the data radio bearer 300 to be used for the test data. Hence in this example, an existing data radio bearer is defined by the traffic application entity 520 as the data radio bearer 300 to be used for the test data. An IP-host with an IP- address in the same domain as the user equipment 130 is set up.

### Action 52

The traffic application entity 520 generates a test data, i.e. certain traffic flow, e.g. a ping.

### Action 53

The traffic application entity 520 sends the test data packet to the user plane entity 510 and records the time when the test data packet is sent.

### Action 54

The user plane entity 510 handles the test data as any other data according to the QoS and schedules it for transmission to the user equipment 130 using the in action 51 defined data radio bearer 300.

### Action 55

The user equipment 130 handles the test data as any other data, unaware of the fact that the test data has been generated in the base station 120 for test purposes, and sends a response to the test data back to the base station 120 on the defined data rado bearer 300. In the case of the test data being a ping, it returns the ping.

### Action 56

The response is received in the user plane entity 510, also on the established data radio bearer 300. The user plane entity 510 forwards the response to the traffic application entity 520.

### Action 57

The traffic application entity 520 receives the response and determines an integrity based on it, if the test data was a ping, the integrity may be a delay. Statistics may be generated based on the determined integrity. Both standard ping, round trip time, of two way ping may be used if the user equipment 130 supports time stamping.

### Action 58

The traffic application entity 520 discards the response, and it is not sent on the user plane path up to the serving gateway 135.

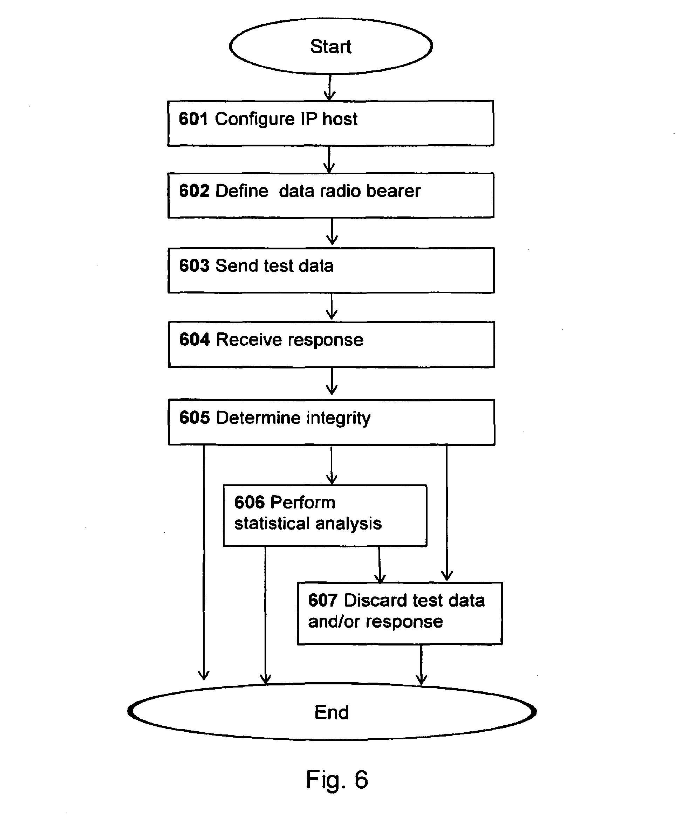

Embodiments herein relating to a method in the base station 120 for determining an integrity of the air interface 145 between the base station 120 and a user equipment 130 will now be further elaborated and described with reference to the flowchart depicted in **figure 6****.** These embodiments will be described in a more general way. As previously mentioned, the base station 120 and the user equipment 130 are comprised in the packet switched network 100. The packet switched network 100, the base station 120, and the user equipment 130 may be of any of the in relation to figure 1 previously described types.

The method comprises the following actions, which actions may be taken in any suitable order.

By integrity is understood a performance for an application in the air interface 145 such as a delay, a jitter, a throughput etc. Delay is typically measured as a number of milli seconds, jitter as a variation within a limit of milliseconds, and throughput as a number of bits that are delivered within a certain time period.

**In action 601,** the base station 120 configures an internet protocol host in the base station 120. The internet protocol host is configured with a first internet protocol address in the same domain as a second internet protocol. The second internet protocol address is an internet protocol address of the user equipment 130.

This action may correspond fully or partially to the previously described actions 201, 41, and 51.

**In action 602,** the base station 120 defines a data radio bearer 300 between the base station 120 and the user equipment 130. The data radio bearer 300 is limited to the air interface 145 between the base station 120 and the user equipment 130.

In some embodiments, the defining is performed by selecting an existing data radio bearer between the base station 120 and the user equipment 130. This may correspond fully or partially to one or more of the previously described actions 202 and 51.

In some embodiments, the defining is performed by setting up a new data radio bearer between the base station 120 and the user equipment 130. This may correspond fully or partially to one or more of the previously described actions 202 and 42.

**In action 603,** the base station 120 sends a test data to the user equipment 120 in the defined data radio bearer 300. The test data is sent on an internet protocol level from the first internet protocol address to the second internet protocol address.

In some embodiments, the test data is an echo request and the integrity to be measured is a delay in the air interface 145.

In some embodiments, the test data corresponds to a traffic pattern for a data flow associated with a specific quality of service.

This action may correspond fully or partially to one or more of the previously described actions 204, 43, 44, 53 and 54.

**In action 604,** the base station 120 receives a response associated with the test data from the user equipment 130.

This action may correspond fully or partially to one or more of the previously described actions 206, 46, 47, 56 and 57.

In action 605, the base station 120 determines an integrity of the air interface 145 based on the response.

This may correspond fully or partially to one or more of the previously described actions 207, 47, and 57.

In action 606, which is an optional action, the base station 120 performs a statistical analysis based on the determined integrity of the air interface 145.

This action may correspond fully or partially to the previously described actions 208, 47, and 57. In the figure 6 the arrows indicate possible combinations of all of or some of the actions 601-607.

In action 607, which is also an optional action, the base station 120 further discards the test data and/or the response to prevent it from reaching the gateway 135 of the packet switched network 100.

This action may correspond fully or partially to the previously described actions 209, 48, and 58.

According to some embodiments, the method further comprises identifying responses which are associated with a handover situation, and which may hence not be relevant for the determination of the integrity, since handover situations may introduce for example additional delays which are not related specifically to the air interface 145.

The method may further comprise handling the data radio bearer defined in action 602 in case of a handover and evaluating the quality or profile of the integrity, that is, determining in which circumstances the test data is sent and/or the response is received. For example the circumstances may be that the user equipment 130 has stable connectivity to one base station, that there is a preparation for handover, that there is a fallback from an initiated but stopped handover, that there is a handover to another radio technology, etc. Depending on the circumstances, the test result may be more or less relevant, since some circumstances cause additional delays.

Thanks to some embodiments herein, it is possible to generate statistics based on special test data traffic that may be used for optimization and performance overview.

Moreover, according to some embodiments herein, such statistics generation does not have to occur in the critical loop, i.e. in the 1 ms time window that the LTE scheduler works on.

Note that, even if LTE has been used as a reference, it may be possible to reuse embodiments herein for other technologies.

Note also that the test data may be other types of flows than a ping, and may be used to see how the performance for an application is in the air interface 145, e.g. determine an integrity for a flow of test data that represents voice internet protocol (VoIP), Mobile TV etc may be set up.

A list of connected IP-addresses to several different user equipments 130 which are connected to the base station 120 may be used to choose the first IP-address in the IP-host.

In some embodiments, several IP-hosts are set up for the purpose of sending test data to several user equipments 130. Test data, such as pings, may then be sent to several IP-addresses derived for example from such a list as the above described list.

The method according to some embodiments herein may be initiated by an MME, or by an ERAB setup procedure.

In some embodiments, the method is initiated by the user equipment 130, or another network node which is not shown in the figure 1.

In some embodiments herein, the actions 601 and 602 are triggered by the user equipment 130.

In some embodiments, the sending of the test data is performed by the user equipment 130, and the response is received by the user equipment 130.

In such embodiments, the determination of the integrity may also be performed by the user equipment 130.

In some embodiments herein, the method is initiated by the base station 130 without informing MME. This may be done with RRC reconfiguration procedure.

In some embodiments, no other data traffic than the test data and the response is allowed by the base station 120 on the data resource bearer defined in embodiments herein.

Other echoes than pings may be used to get the delay per UL/DL according to some embodiments herein.

The data radio bearer may be configured to have any Quality of Service Indicator (QCI) to determine the integrity, for example a delay, delay for different QoS.

The inserted test data may be handled like any other type of data that is transmitted and scheduled by the base station 120.

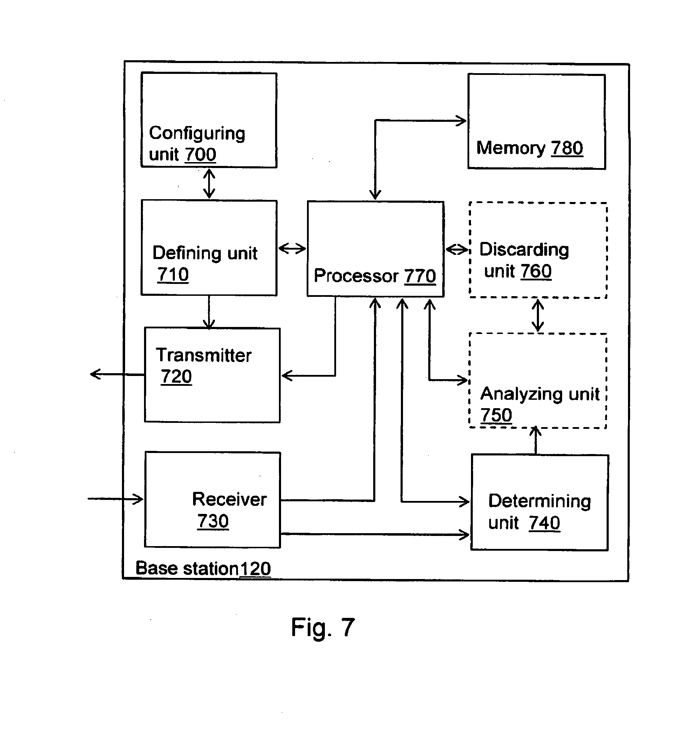

To perform the actions above for determining an integrity of the air interface 145 between the base station 120 and a user equipment 130, the base station 120 comprises an arrangement schematically depicted in **figure 7****.** As mentioned above, the base station 120 and the user equipment 130 are comprised in the packet switched network 100. The packet switched network 100, the base station 120, and the user equipment 130 may be of any of the in relation to figure 1 previously described types.

The term "configured to" used herein may also be referred to as "arranged to".

The term "unit" used herein may comprise hardware circuitry and/or comprise a software implementation.

The base station 120 comprises **a configuring unit 700.** The configuring unit 700 is arranged to configure an internet protocol host in the base station 120, with a first internet protocol address in the same domain as a second internet protocol address, which second internet protocol address is an internet protocol address of the user equipment 130.

The configuring unit 700 may be comprised in a traffic application entity such as the in figures 4 and 5 previously described traffic application entities 420 and 520.

The base station 120 further comprises **a defining unit 710.** The defining unit 710 is configured to define a data radio bearer 300 between the base station 120 and the user equipment 130, which data radio bearer 300 is limited to the air interface 145 between the base station 120 and the user equipment 130.

The defining unit 710 may further be configured to perform the defining by selecting an existing data radio bearer between the base station 120 and the user equipment 130.

The defining unit 710 may further be configured to perform the defining by setting up a new data radio bearer between the base station 120 and the user equipment 130.

The defining unit 710 may be comprised in a control plane entity such as the in relation to figure 4 previously described control plane entity 400, and/or in a traffic application entity such as the in figure 5 previously described traffic application entity 520.

The base station 120 further comprises **a transmitter 720.** The transmitter 720 is configured to send a test data to the user equipment 130 in the defined data radio bearer 300. The transmitter is configured to send the test data on an internet protocol level from the first internet protocol address to the second internet protocol address.

The transmitter 720 may comprise functionality from one or more of the traffic application entities 420, 520, and the user plane entities 410, 510.

The test data may be an echo request from the base station 120 to the user equipment 130 and the integrity to be measured may then be a delay in the air interface 145.

The test data may correspond to a traffic pattern for a data flow associated with a specific quality of service.

The base station 120 further comprises **a receiver 730.** The receiver 730 is configured to receive a response from the user equipment 130. The response is associated with the test data.

The receiver 730 may comprise functionality from one or more of the traffic application entities 420, 520, and the user plane entities 410, 510.

The base station 120 further comprises **a determining unit 740.** The determining unit 740 is configured to determine an integrity of the air interface 145 based on the response.

The determining unit 740 may be comprised in a traffic application entity such as the in figures 4 and 5 previously described traffic application entities 420 and 520.

The base station 120 may further comprise **an analyzing unit 750.** The analyzing unit 750 is configured to perform a statistical analysis based on the determined integrity of the air interface 145.

The analysing unit 750 may be comprised in a traffic application entity such as the in figures 4 and 5 previously described traffic application entities 420 and 520.

The base station 120 may further comprise a **discarding unit 760.** The discarding unit 760 is configured to discard the test data and/or the response to prevent it from reaching the gateway 135 of the packet switched network 100.

The discarding unit 760 may be comprised in a traffic application entity such as the in figures 4 and 5 previously described traffic application entities 420 and 520.

The embodiments of the base station 120 for determining an integrity of the air interface 145 between the base station 120 and the user equipment 130, may be implemented through one or more processors, such as **a processor 770** in the base station 120 depicted in figure 7, together with computer program code for performing the actions of embodiments herein.

The program code mentioned above may also be provided as a computer program product, for instance in the form of a data carrier carrying computer program code for performing the embodiments herein when being loaded into the base station 120.

One such carrier may be in the form of a CD ROM disc. It is however feasible with other data carriers such as a memory stick. The computer program code may furthermore be provided as pure program code on a server and downloaded to the base station 120 e.g. remotely.

The base station 120 may further comprise **a memory 780** comprising one or more memory units. The memory 780 is arranged to be used to store data such as for example the test data and/or the response. It may further be arranged to store applications to perform the actions of the embodiments herein when being executed in the base station 120.

The embodiments herein are not limited to the above described embodiments. Various alternatives, modifications and equivalents may be used. Therefore, the above embodiments should not be taken as limiting the scope of the invention, which is defined by the appending claims.

## Claims

1. A method in a base station (120) for determining an integrity of an air interface (145) between the base station (120) and a user equipment (130), which base station (120) and which user equipment (130) are comprised in a packet switched network (100), the method comprising:
- *configuring* (201, 41, 51, 601) in the base station (120) an internet protocol host with a first internet protocol address in the same domain as a second internet protocol address of the user equipment (130),
- *defining* (202, 42, 51, 602) a data radio bearer (300) between the base station (120) and the user equipment (130), which data radio bearer (300) is limited to the air interface (145) between the base station (120) and the user equipment (130),
- *sending* (204, 53, 54, 43, 44, 603) a test data to the user equipment (120) in the defined data radio bearer (300), wherein the test data is sent on an internet protocol level from the first internet protocol address to the second internet protocol address,
- *receiving* (206, 46, 47, 56, 57, 604) a response associated with the test data from the user equipment (130), and
- *determining* (207, 47, 57, 605) an integrity of the air interface (145) based on the response.

2. The method according to claim 1, further comprising *performing* (208, 47, 57, 606) a statistical analysis based on the determined integrity of the air interface (145).

3. The method according to any one of claims 1 or 2, wherein the test data is an echo request and wherein the integrity to be measured is a delay in the air interface (145).

4. The method according to any one of claims 1-3, further comprising *discarding* (209, 48, 58, 607) the test data and/or the response to prevent it from reaching a gateway (135) of the packet switched network (100).

5. The method according to any one of claims 1-4, wherein the test data corresponds to a traffic pattern for a data flow associated with a specific quality of service.

6. The method according to any one of claims 1-5, wherein the defining (203, 42, 51, 602) is performed by selecting an existing data radio bearer between the base station (120) and the user equipment (130).

7. The method according to any one of claims 1-6, wherein the defining (203, 42, 51, 602) is performed by setting up a new data radio bearer between the base station (120) and the user equipment (130).

8. A base station (120) for determining an integrity of an air interface (145) between the base station (120) and a user equipment (130), which base station (120) and which user equipment (130) are comprised in a packet switched network (100), the base station (120) comprising:
- a *configuring unit* (420, 520, 700), arranged to configure in the base station (120) an internet protocol host with a first internet protocol address in the same domain as a second internet protocol address of the user equipment (130),
- a *defining unit* (400, 520, 710) configured to define a data radio bearer (300) between the base station (120) and the user equipment (130), which data radio bearer (300) is limited to the air interface (145) between the base station (120) and the user equipment (130),
- a *transmitter* (410, 420, 510, 520, 720) configured to send to the user equipment (130) a test data in the defined data radio bearer (300), wherein the test data is sent on an internet protocol level from the first internet protocol address to the second internet protocol address,
- a *receiver* (410, 420, 510, 520, 730) configured to receive a response associated with the test data from the user equipment (130), and
- a *determining* unit (420, 520, 740) configured to determine an integrity of the air interface (145) based on the response.

9. The base station (120) according to claim 8, further comprising an *analysing unit* (420, 520, 750) configured to perform a statistical analysis based on the determined integrity of the air interface (145).

10. The base station (120) according to any one of claims 8 or 9, wherein the test data is an echo request from the base station (120) to the user equipment (130) and wherein the integrity to be measured is a delay in the air interface (145).

11. The base station (120) according to any one of claims 8 -10, further comprising a *discarding unit* (420, 520, 760) configured to discard the test data and/or the response to prevent it from reaching a gateway (135) of the packet switched network (100).

12. The base station (120) according to any one of claims 8-11, wherein the test data corresponds to a traffic pattern for a data flow associated with a specific quality of service.

13. The base station (120) according to any one of claims 8-12, wherein the defining unit (520, 700) is further configured to perform the defining by selecting an existing data radio bearer between the base station (120) and the user equipment (130).

14. The base station (120) according to any one of claims 8-13, wherein the defining unit (400, 700) is further configured to perform the defining by setting up a new data radio bearer between the base station (120) and the user equipment (130).

## Patentansprüche

1. Verfahren in einer Basisstation (120) zum Bestimmen einer Integrität einer Luftschnittstelle (145) zwischen der Basisstation (120) und einer Benutzereinrichtung (130), wobei die Basisstation (120) und die Benutzereinrichtung (130) in einem paketvermittelten Netz (100) enthalten sind, wobei das Verfahren umfasst:
- Konfigurieren (201, 41, 51, 601) in der Basisstation (120) eines Internetprotokoll-Hosts mit einer ersten Internetprotokolladresse in der gleichen Domäne wie eine zweite Internetprotokolladresse der Benutzereinrichtung (130),
- Definieren (202, 42, 51, 602) eines Datenfunkträgers (300) zwischen der Basisstation (120) und der Benutzereinrichtung (130), wobei der Datenfunkträger (300) auf die Luftschnittstelle (145) zwischen der Basisstation (120) und der Benutzereinrichtung (130) beschränkt ist,
- Senden (204, 53, 54, 43, 44, 603) von Prüfdaten im definierten Datenfunkträger (300) an die Benutzereinrichtung (120), wobei die Prüfdaten auf einer Internetprotokollebene von der ersten Internetprotokolladresse an die zweite Internetprotokolladresse gesendet werden,
- Empfangen (206, 46, 47, 56, 57, 604) einer Antwort, die mit den Prüfdaten assoziiert ist, von der Benutzereinrichtung (130), und
- Bestimmen (207, 47, 57, 605) einer Integrität der Luftschnittstelle (145) basierend auf der Antwort.

2. Verfahren nach Anspruch 1, ferner umfassend ein Durchführen (208, 47, 57, 606) einer statistischen Analyse basierend auf der bestimmten Integrität der Luftschnittstelle (145).

3. Verfahren nach einem der Ansprüche 1 oder 2, wobei es sich bei den Prüfdaten um eine Echoanforderung handelt, und wobei die zu messende Integrität eine Verzögerung in der Luftschnittstelle (145) ist.

4. Verfahren nach einem der Ansprüche 1 bis 3, ferner umfassend ein Verwerfen (209, 48, 58, 607) der Prüfdaten und/oder der Antwort, um zu verhindern, dass sie ein Gateway (135) des paketvermittelten Netzes (100) erreichen/erreicht.

5. Verfahren nach einem der Ansprüche 1 bis 4, wobei die Prüfdaten einem Verkehrsmuster für einen Datenfluss entsprechen, der mit einer spezifischen Dienstgüte assoziiert ist.

6. Verfahren nach einem der Ansprüche 1 bis 5, wobei das Definieren (203, 42, 51, 602) durch Auswählen eines bestehenden Datenfunkträgers zwischen der Basisstation (120) und der Benutzereinrichtung (130) durchgeführt wird.

7. Verfahren nach einem der Ansprüche 1 bis 6, wobei das Definieren (203, 42, 51, 602) durch Aufbauen eines neuen Datenfunkträgers zwischen der Basisstation (120) und der Benutzereinrichtung (130) durchgeführt wird.

8. Basisstation (120) zum Bestimmen einer Integrität einer Luftschnittstelle (145) zwischen der Basisstation (120) und einer Benutzereinrichtung (130), wobei die Basisstation (120) und die Benutzereinrichtung (130) in einem paketvermittelten Netz (100) enthalten sind, wobei die Basisstation (120) umfasst:
- eine Konfigurationseinheit (420, 520, 700), die so ausgelegt ist, dass sie in der Basisstation (120) einen Internetprotokoll-Host mit einer ersten Internetprotokolladresse in der gleichen Domäne wie eine zweite Internetprotokolladresse der Benutzereinrichtung (130) konfiguriert,
- eine Definitionseinheit (400, 520, 710), die so konfiguriert ist, dass sie einen Datenfunkträger (300) zwischen der Basisstation (120) und der Benutzereinrichtung (130) definiert, wobei der Datenfunkträger (300) auf die Luftschnittstelle (145) zwischen der Basisstation (120) und der Benutzereinrichtung (130) beschränkt ist,
- einen Sender (410, 420, 510, 520, 720), der so konfiguriert ist, dass er Prüfdaten im definierten Datenfunkträger (300) an die Benutzereinrichtung (130) sendet, wobei die Prüfdaten auf einer Internetprotokollebene von der ersten Internetprotokolladresse an die zweite Internetprotokolladresse gesendet werden,
- einen Empfänger (410, 420, 510, 520, 730), der so konfiguriert ist, dass er eine Antwort, die mit den Prüfdaten assoziiert ist, von der Benutzereinrichtung (130) empfängt, und
- eine Bestimmungseinheit (420, 520, 740), die so konfiguriert ist, dass sie eine Integrität der Luftschnittstelle (145) basierend auf der Antwort bestimmt.

9. Basisstation (120) nach Anspruch 8, ferner umfassend ein Analyseeinheit (420, 520, 750), die so konfiguriert ist, dass sie eine statistische Analyse basierend auf der bestimmten Integrität der Luftschnittstelle (145) durchführt.

10. Basisstation (120) nach einem der Ansprüche 8 oder 9, wobei es sich bei den Prüfdaten um eine Echoanforderung von der Basisstation (120) an die Benutzereinrichtung (130) handelt, und wobei die zu messende Integrität eine Verzögerung in der Luftschnittstelle (145) ist.

11. Basisstation (120) nach einem der Ansprüche 8 bis 10, ferner umfassend eine Verwerfungseinheit (420, 520, 760, 607), die so konfiguriert ist, dass sie die Prüfdaten und/oder die Antwort verwirft, um zu verhindern, dass sie ein Gateway (135) des paketvermittelten Netzes (100) erreichen/erreicht.

12. Basisstation (120) nach einem der Ansprüche 8 bis 11, wobei die Prüfdaten einem Verkehrsmuster für einen Datenfluss entsprechen, der mit einer spezifischen Dienstgüte assoziiert ist.

13. Basisstation (120) nach einem der Ansprüche 8 bis 12, wobei die Definitionseinheit (520, 700) ferner so konfiguriert ist, dass sie das Definieren durch Auswählen eines bestehenden Datenfunkträgers zwischen der Basisstation (120) und der Benutzereinrichtung (130) durchgeführt.

14. Basisstation (120) nach einem der Ansprüche 8 bis 13, wobei die Definitionseinheit (400, 700) ferner so konfiguriert ist, dass sie das Definieren durch Aufbauen eines neuen Datenfunkträgers zwischen der Basisstation (120) und der Benutzereinrichtung (130) durchführt.

## Revendications

1. Procédé dans une station de base (120) pour déterminer une intégrité d'une interface aérienne (145) entre la station de base (120) et un équipement d'utilisateur (130), laquelle station de base (120) et lequel équipement d'utilisateur (130) sont compris dans un réseau à commutation par paquets (100), le procédé comprenant de :
- configurer (201,41,51,601) dans la station de base (120) un hôte de protocole Internet avec une première adresse de protocole Internet dans le même domaine qu'une seconde adresse de protocole Internet de l'équipement d'utilisateur (130),
- définir (202,42,51,602) un support radio de données (300) entre la station de base (120) et l'équipement d'utilisateur (130), lequel support radio de données (300) est limité à l'interface aérienne (145) entre la station de base (120) et l'équipement d'utilisateur (130),
- envoyer (204,53,54,43,44,603) une donnée de test à l'équipement d'utilisateur (120) dans le support radio de données défini (300), dans lequel la donnée de test est envoyée sur un niveau de protocole Internet de la première adresse de protocole Internet à la seconde adresse de protocole Internet,
- recevoir (206,46,47,56,57,604) une réponse associée à la donnée de test à partir de l'équipement d'utilisateur (130) et
- déterminer (205,47,57,605) une intégrité de l'interface aérienne (145) sur la base de la réponse.

2. Procédé selon la revendication 1, comprenant en outre d'effectuer (208,47,57,606) une analyse statistique sur la base de l'intégrité déterminée de l'interface aérienne (145).

3. Procédé selon une quelconque des revendications 1 ou 2, dans lequel la donnée de test est une demande d'écho et dans lequel l'intégrité à mesurer est un retard dans l'interface aérienne (145).

4. Procédé selon une quelconque des revendications 1-3, comprenant en outre de rejeter (209,48,58,607) la donnée de test et/ou la réponse pour l'empêcher d'atteindre une passerelle (135) du réseau à commutation par paquets (100).

5. Procédé selon une quelconque des revendications 1-4, dans lequel la donnée de test correspond à un modèle de trafic pour un flux de donnée associée à une qualité de service spécifié.

6. Procédé selon une quelconque des revendications 1-5, dans lequel la définition (203,42,51,602) est effectuée en sélectionnant un support radio de données existant entre la station de base (120) et l'équipement d'utilisateur (130).

7. Procédé selon une quelconque des revendications 1-6, dans lequel la définition (203,42,51,602) est effectuée en établissant un nouveau support radio de données entre la station de base (120) et l'équipement d'utilisateur (130).

8. Station de base (120) pour déterminer une intégrité d'une interface aérienne (145) entre la station de base (120) et un équipement d'utilisateur (130), laquelle station de base (120) et lequel équipement d'utilisateur (130) sont compris dans un réseau à commutation par paquets (100), la station de base (120) comprenant:
- une unité de configuration (420,520,700) agencée pour configurer dans la station de base (120) un hôte de protocole Internet avec une première adresse de protocole Internet dans le même domaine qu'une seconde adresse de protocole Internet de l'équipement d'utilisateur (130),
- une unité de définition (400,520,710) configurée pour définir un support radio de données (300) entre la station de base (120) et l'équipement d'utilisateur (130), lequel support radio de données (300) est limité à l'interface aérienne (145) entre la station de base (120) et l'équipement d'utilisateur (130),
- un émetteur (410,420,510,520,720) configuré pour envoyer une donnée de test à l'équipement d'utilisateur (130) dans le support radio de données défini (300), dans lequel la donnée de test est envoyée sur un niveau de protocole Internet de la première adresse de protocole Internet à la seconde adresse de protocole Internet,
- un récepteur (410,20,510,520,730) configuré pour recevoir une réponse associée à la donnée de test à partir de l'équipement d'utilisateur (130) et
- une unité de détermination (420,520,740) configurée pour déterminer une intégrité de l'interface aérienne (145) sur la base de la réponse.

9. Station de base (120) selon la revendication 8, comprenant en outre une unité d'analyse (420,520,750) configurée pour effectuer une analyse statistique sur la base de l'intégrité déterminée de l'interface aérienne (145).

10. Station de base (120) selon une quelconque des revendications 8 ou 9, dans laquelle la donnée de test est une demande d'écho de la station de base (120) vers l'équipement d'utilisateur (130) et dans lequel l'intégrité à mesurer est un retard dans l'interface aérienne (145).

11. Station de base (120) selon une quelconque des revendications 8-10, comprenant en outre une unité de rejet (420,520,760) configurée pour rejeter la donnée de test et/ou la réponse pour l'empêcher d'atteindre une passerelle (135) du réseau à commutation par paquets (100).

12. Station de base (120) selon une quelconque des revendications 8-11, dans laquelle la donnée de test correspond à un modèle de trafic pour un flux de donnée associée à une qualité de service spécifié.

13. Station de base (120) selon une quelconque des revendications 8-12, dans lequel l'unité de définition (520,700) est en outre configurée pour effectuer la définition en sélectionnant un support radio de données existant entre la station de base (120) et l'équipement d'utilisateur (130).

14. Station de base (120) selon une quelconque des revendications 8-13, dans lequel l'unité de définition (400,700) est en outre configurée pour effectuer la définition en réglant un nouveau support radio de données entre la station de base (120) et l'équipement d'utilisateur (130).
